# EUROPEAN PATENT SPECIFICATION

(11) **EP 2 241 399 B1**
(45) Date of publication and mention of the grant of the patent: **31.08.2011**
(21) Application number: 10153889.0
(22) Date of filing: 17.02.2010
(51) Int. Cl.: B23K 35/30, C22C 19/05

(54) **Welding material and welding rotor**
Soudage de matériau et soudage de rotor
Schweißgut und Schweißrotor

(30) Priority: 31.03.2009 JP 2009083988
(43) Date of publication of application: 20.10.2010
(73) Proprietor: Hitachi Ltd., Tokyo 100-8280 (JP)
(72) Inventor: Sato, Jun, Tokyo 100-8220 (JP); Imano, Shinya, Tokyo 100-8220 (JP); Doi, Hiroyuki, Tokyo 100-8220 (JP)
(74) Representative: MERH-IP Matias Erny Reichl Hoffmann

(56) References cited:
- EP-A2- 1 849 881
- US-A1- 2008 250 790

## Description

### BACKGROUND OF THE INVENTION

### (1) Field of the Invention

The present invention relates to a welding material which is preferable for different materials and a welding rotor for a steam turbine using the same.

### (2) Description of Related Art

A Ni-based alloy having a good heat resistance is utilized for a high temperature member such as an industrial gas turbine, an aviation jet engine or the like. The Ni-based heat resisting alloy includes a lot of solution reinforcing elements such as W, Mo, Co and the like, or a lot of precipitation reinforcing elements such as Al, Ti, Nb, Ta and the like, and has an excellent high temperature strength. The γ' phase (Ni₃Al, Ni₃Ti) corresponding to a main reinforcing phase has a behavior that a strength rises in accordance with a temperature rise, and is extremely effective for improving a strength characteristic at a high temperature. Conventionally, in the Ni-based alloy, the heat resisting alloy has been developed by mainly paying attention to how much the γ' phase is precipitated.

On the other hand, in a steam turbine member which is utilized in a coal thermal power generation, a high Cr ferritic heat resisting steel has been conventionally utilized. The ferritic heat resisting steel is generally excellent in a manufacturing characteristic in comparison with the Ni-based alloy, and it is possible to manufacture a large scale forged material which goes beyond 20 tons such as a turbine rotor.

In the light of a reduction of CO₂ discharged from a thermal power generation plant, a resource saving and the like, it is required to raise a steam temperature of the steam turbine for achieving a power generation having a higher efficiency. A durable temperature of the ferritic heat resisting steel which is actually used at present is about 600 °C, however, in order to further raise the steam temperature, it is necessary to use a Ni-based heat resisting alloy having a higher durable temperature. However, in the Ni-based alloy, it is hard to manufacture a large scale material which is equal to the ferritic heat resisting steel in accordance with the present manufacturing technique.

Then, it is under review to correspond to a rise of the steam temperature of the steam turbine by setting only a portion which comes to the highest temperature and is exposed to a severe condition for a material, such as a rotor vane, a rotor and the like in a steam inflow side to the Ni-based alloy, and setting the other portions to the conventional ferritic heat resisting steel.

In the structure in which the Ni-based alloy and the ferritic heat resisting steel are combined, it is necessary to bond the Ni-based alloy portion and the ferritic heat resisting steel portion in accordance with a technique such as a welding or the like. EP 1 107 846 B1 discloses the composition of a welding alloy used for welding Ni-based alloys with other alloys in applications such as steam generators. Further, there is fear that a problem caused by a difference of characteristics between the Ni-based alloy and the ferritic heat resisting steel.

For example, in JP-A-9-157779 (patent document 1) and JP-A-2000-256770 (patent document 2), there have been proposed a Ni-based alloy having a low thermal expansion coefficient, for relaxing a thermal stress caused by a thermal expansion coefficient difference between the Ni-based alloy and the ferritic heat resisting steel.

### BRIEF SUMMARY OF THE INVENTION

In the steam turbine obtained by integrating the Ni-based alloy and the steel material in accordance with the welding, a weld metal portion is provided between them. An object of the present invention is to provide a welding material which is preferable for a weld joint between different materials such as a steel material and a Ni-based alloy, and a welding rotor which uses the same and has a high reliability.

Between the Ni-based alloy and the steel material which are applied to the steam turbine, not only the thermal expansion coefficient, but also a strength, an alloy structure, a heat treating condition and the like are different. It is preferable to dissolve the differences in a strength, a metallurgical structure stability and a heat treating condition between both the elements by a weld metal portion provided in a boundary portion corresponding to a boundary portion between both the elements, and a welding material forming it. As the welding material which is suitable for the different material welding between the Ni-based alloy and the ferritic heat resisting steel in the steam turbine mentioned above, the inventors of the present invention has run into a development of a Ni-Fe-based alloy. The welding material in accordance with the present invention is constituted by a Ni-Fe-based alloy which includes Cr: 14 to 18 %, Al: 1.0 to 2.5 %, Mo + W: 2.5 to 5.0 %, C: 0.01 to 0.10 %, B: 0.001 to 0.03 %, and Fe: 15 to 20 %, in mass, and the remaining portion is constructed by an unavoidable impurity and Ni.

Optionally, Co, Ti, Nb, Si and Mn may be added to the welding material constituted by the Ni-Fe-based alloy mentioned above, as occasion demands. In this case, it is preferable that a content thereof is set to a range of Co: 0.1 to 5.0 %, Ti: 0.1 to 0.5 %, Nb: 0.1 to 2.0 %, Si: 0.01 to 0.3 % and Mn: 0.01 to 0.3 % in mass.

The other present invention is a steam turbine member having a weld metal portion using the welding material mentioned above. Particularly, it is preferable for a high temperature member having a foreign material weld portion in which a Ni-based alloy and an iron-based alloy are combined. Particularly, it is preferable for a welding rotor in which at least partial rotor vane is constructed by the Ni-based alloy, and the rotor shaft is constructed by the iron-based alloy, and a welding rotor in which a steam inflow side (a front stage side) of the rotor is constructed by the Ni-based alloy, and a steam outflow side (a rear stage side) is constructed by the iron-based alloy.

Further, it is preferable that the welding material in accordance with the present invention is used in any of shapes of a welding rod, a welding wire and/or a welding powder.

Further, in accordance with the present invention, there is provided a turbine rotor for a steam turbine constructed by bonding a first member made of an iron-based alloy, and a second member made of a Ni-based alloy or a Ni-Fe-based alloy, wherein the first and second members are bonded by the welding material described in the third aspect.

### EFFECT OF THE INVENTION

In accordance with the structure mentioned above, it is possible to provide the welding material which is preferable for welding the Ni-based alloy and the steel material. Further, it is possible to provide the welding rotor having the high reliability.

Other objects, features and advantages of the invention will become apparent from the following description of the embodiments of the invention taken in conjunction with the accompanying drawings.

### BRIEF DESCRIPTION OF THE SEVERAL VIEWS OF THE DRAWINGS

Figs. 1A to 1C are views for comparing a conventional welding material and the present invention;
Fig. 2 is a creep strain curve;
Fig. 3 is a view showing a creep rupture time of an alloy in accordance with an embodiment;
Fig. 4 is a view showing a creep rupture elongation of the alloy in accordance with the embodiment; and
Figs. 5A and 5B are views showing a steam turbine rotor using a welding material in accordance with the present invention.

### DETAILED DESCRIPTION OF THE INVENTION

As a welding material of a rotor for a steam turbine obtained by welding different materials, such as a steel material and a Ni-based alloy, or the steel material and a Ni-Fe-based alloy, or the like, the inventors of the present invention have conducted a study of a Ni-based heat resisting alloy, for example, a strength evaluation, a thermodynamic calculation and the like, and have developed a Ni-Fe-based alloy which is excellent in a welding characteristic.

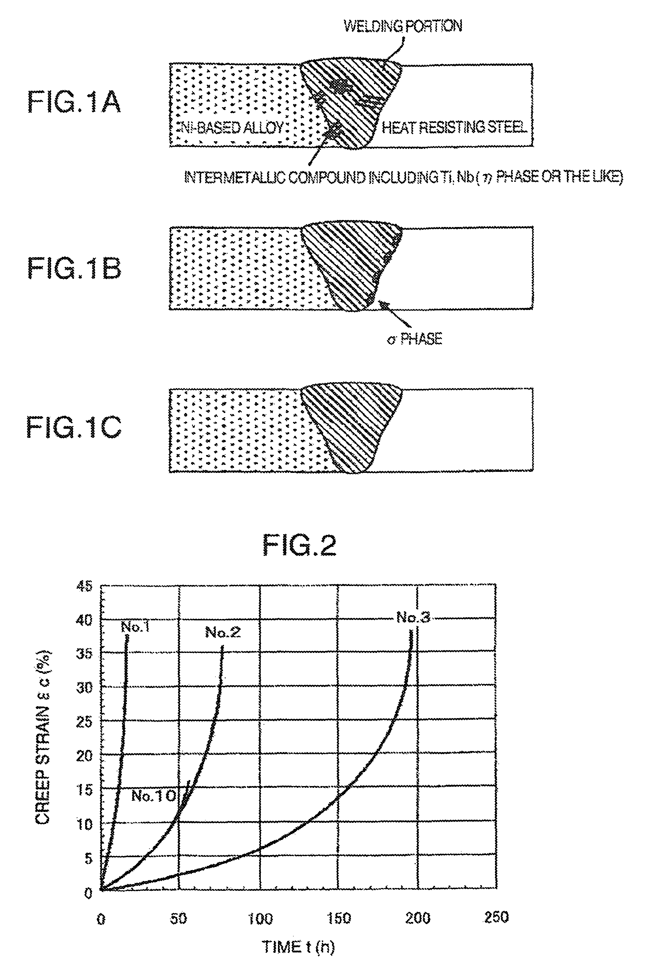

In Figs. 1A and 1B, there is explained by the drawings a case that a welding between different materials is carried out by a conventional welding material. In the case that the Ni-based alloy and the heat resisting steel are welded by using the conventional Ni-based alloy as the welding material, there is a case that several problems are generated. For example, Fig. 1A is a view showing a welding by a conventional material A including a lot of Ti and Nb. In this case, a lot of intermetallic compound layer with the Ni-based alloy is generated in a portion at which the Ni-based alloy and the welding material are mixed. An intermetallic compound such as an η phase or the like is generated by Ti and Nb included in the welding material of the Ni-based alloy, and a base material in the Ni base side, and lowers a ductility and a toughness. Further, Fig. 1B is a view showing a welding in accordance with a conventional material B including a lot of Cr. In this case, a σ phase is generated in a portion at which the iron-based alloy and the welding material are mixed, by the Cr included in the welding material of the Ni-based alloy, and a base material of the iron base side, and there is generated such a problem that a welding joint member is embrittled.

Fig. 1C is a view showing a welding joint using the welding metal in accordance with the present invention. The alloy in accordance with the present invention is an alloy obtained by holding down the Nb and Ti amounts, adding a lot of Al as well as reducing the Cr amount, and is excellent in the welding characteristic. A weld crack caused by the harmful phase as mentioned above and a deterioration under a high temperature condition are hard to be generated, by employing the alloy mentioned above. A description will be given below of an effect of each of the elements included in the developed alloy, and a limiting reason of the alloy composition.

Cr is an element which improves an oxidation resistance and a high-temperature corrosion resistance by forming a dense oxide film constructed by Cr₂O₃ on a surface thereof. In order to utilize for the high temperature member which is targeted by the present invention, it is necessary to include at least 14 % in mass. However, if it is added at 18 % in mass or more, the σ phase is precipitated and the ductility and a fracture toughness of the material are deteriorated, so that it is necessary to set it within a range which does not go beyond 18 % in mass. A particularly preferable range is between 13 and 17 % in mass.

Al is an element which forms the γ' phase (Ni₃Al, Ni₃Ti), and is an element which is essential to a reinforcement of a γ' phase reinforcing type Ni-based alloy. An Al amount is a main factor which gains ascendancy over a solution temperature and a precipitation amount of the γ' phase, and in the case that it runs short, a γ' phase precipitation amount caused by an aging is small, and a sufficient strength can not be obtained. In the alloy in accordance with the present invention, since the amount of Ti and Nb corresponding to the other reinforcing elements is small as mentioned below, at least 1.0 % in mass Al amount is necessary for obtaining a sufficient strength, however, if it goes beyond 2.5 %, the welding characteristic and the structure stability are deteriorated. A preferable range is between 1.2 and 2.4 %.

Mo and W have an effect of reinforcing a parent phase on the basis of a solution reinforcement. Since the alloy in accordance with the present invention does not include the elements such as Ti, Nb and Ta which are added as the reinforcing element in the normal Ni-based heat resisting alloy, Mo and W are added at a comparatively large amount. In order to obtain a sufficient reinforcement, it is necessary to add at 2.5 % or more, however, if the added amount goes beyond 5.0 %, a generation of an intermetallic compound layer which is hard and brittle is promoted, and a deterioration of a high-temperature forging characteristic is caused. A more preferable range is between 2.7 and 4.5 % in mass.

C is dissolved into the parent phase so as to improve a tensile strength at a high temperature, and improves a grain boundary strength by forming a carbide such as MC, M₂₃C₆ and the like. These effects become remarkable from about 0.01 % in mass, however, since an excess addition of C causes a rough and large eutectic carbide, and causes a reduction of toughness, 0.1 % in mass is an upper limit. An adding amount between 0.03 and 0.08 % in mass is preferable.

B has an effect of reinforcing a grain boundary by being added at a small amount, and improving a creep strength. However, since an excess addition causes a partial fusion due to a precipitation of a harmful phase and a reduction of a fusing point, an appropriate range thereof is set to B: 0.001 to 0.03.

Co has an effect of improving a high-temperature strength by substituting for Ni and dissolving into the parent phase, and contributes to a high-temperature corrosion resistance. In the alloy composition range of the present invention, these effects are significantly recognized at 0.1 % in mass or more, however, since an excess addition promotes the precipitation of the harmful phase such as the σ phase and the µ phase, an upper limit is set to 5.0 % in mass. A preferable range is between 0.5 and 4.0 % in mass.

In accordance with the present invention, it is possible to a welding material which has an improved balance between the high-temperature strength and the ductility, does not form any harmful phase in the welding portion between the Ni-based super alloy and the steel material, and is excellent in a structure stability, and the welding material is fed as a mode such as a welding rod, a welding wire, a welding powder or the like, to the welding portion. Further, the welding rotor which is bonded by the welding material can obtain a higher strength reliability.

### Embodiment

Table 1 shows a chemical composition of embodiment alloys 1 to 10 and comparative alloys 1 to 4 which are provided for an experiment. 10 kg alloys having these compositions are dissolved in accordance with a high frequency induction heating, is thereafter hot forged into a round rod shape, and is formed as a test material in accordance with a machine work.

**Table 1**

| | essential component | | | | | | | | added component | | | | |
|---|---|---|---|---|---|---|---|---|---|---|---|---|---|
| | Cr | Al | Mo | W | Fe | B | C | Ni | Co | Ti | Nb | Si | Mn |
| embodiment alloy 1 | 15.3 | 1.3 | 2.8 | 0.0 | 18.5 | 0.005 | 0.040 | remains | 0.4 | 0.1 | 1.5 | 0.20 | 0.10 |
| embodiment alloy 2 | 14.8 | 1.5 | 2.8 | 0.0 | 18.0 | 0.005 | 0.040 | remains | 0.4 | 0.1 | 1.5 | 0.20 | 0.10 |
| embodiment alloy 3 | 14.4 | 1.7 | 2.8 | 0.0 | 17.5 | 0.005 | 0.040 | remains | 0.4 | 0.1 | 1.5 | 0.20 | 0.10 |
| embodiment alloy 4 | 15.3 | 1.8 | 1.5 | 1.5 | 18.5 | 0.005 | 0.060 | remains | 0.4 | 0.1 | 1.5 | 0.10 | 0.10 |
| embodiment alloy 5 | 14.8 | 2.1 | 1.5 | 1.0 | 18.0 | 0.005 | 0.060 | remains | 0.4 | 0.1 | 1.5 | 0.10 | 0.10 |
| embodiment alloy 6 | 14.4 | 2.4 | 1.5 | 0.5 | 17.0 | 0.005 | 0.060 | remains | 0.4 | 0.1 | 1.5 | 0.10 | 0.10 |
| embodiment alloy 7 | 14.5 | 1.5 | 1.4 | 1.4 | 16.0 | 0.005 | 0.060 | remains | 0.4 | 0.1 | 0.5 | 0.20 | 0.20 |
| embodiment alloy 8 | 14.5 | 1.5 | 2.1 | 2.1 | 16.5 | 0.005 | 0.040 | remains | 0.4 | 0.1 | 0.5 | 0.20 | 0.20 |
| embodiment alloy 9 | 16.0 | 1.5 | 1.4 | 1.4 | 16.0 | 0.005 | 0.060 | remains | 0 | 0 | 0 | 0 | 0 |
| embodiment alloy 10 | 16.0 | 2.0 | 1.4 | 2.1 | 17.0 | 0.005 | 0.040 | remains | 0 | 0 | 0 | 0 | 0 |
| comparative alloy 1 | 18.0 | 0.6 | 3.0 | 0.0 | 17.0 | 0.002 | 0.050 | remains | 0.0 | 0.1 | 5.5 | 0.20 | 0.10 |
| comparative alloy 2 | 15.0 | 0.5 | 3.0 | 0.0 | 18.5 | 0.005 | 0.040 | remains | 0.4 | 0.9 | 1.0 | 0.20 | 0.10 |
| comparative valloy 3 | 15.0 | 3.5 | 3.0 | 1.5 | 20.0 | 0.005 | 0.040 | remains | 0 | 0 | 0 | 0 | 0 |
| comparative alloy 4 | 18.0 | 0.6 | 0 | 1.5 | 17.5 | 0.002 | 0.050 | remains | 0 | 0 | 0 | 0 | 0 |

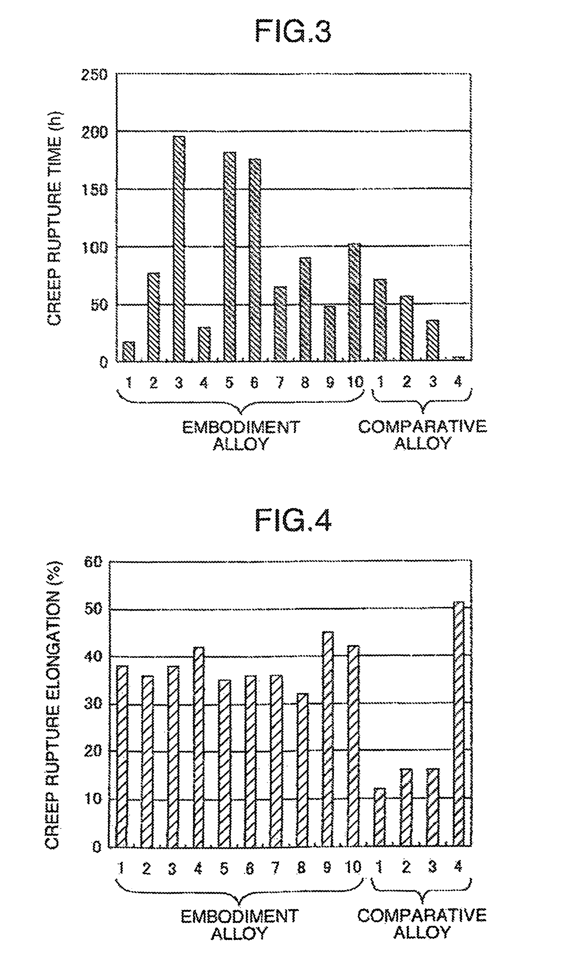

Fig. 2 shows a time-strain curve of a creep test result. A creep test condition is 700 °C and 333 MPa. In the composition range of the alloy in accordance with the present invention, the Al amount is increased, the creep rupture time becomes longer in accordance that the γ' phase precipitation amount is increased, and the strength is increased, however, the rupture elongation indicating the ductility is about 50 % and is good, and it can be understood that the rupture elongation is hardly changed even if Al is increased. On the other hand, in the comparative alloy in which the Ti amount is increased, the rupture time becomes longer, however, the elongation is reduced to half, and the comparative alloy is not desirable in the light of the ductility. In the case that the strength is improved by increasing Nb, the reduction of the ductility is seen in the same manner. Figs. 3 and 4 show the results of the creep rupture time and the creep rupture elongation in the creep test (700 °C, 333 MPa) of each of the alloys. In the embodiment alloys, each of the alloys can obtain a creep rupture time which is equal to or more than 10 hours and a creep rupture elongation which is equal to or more than 30 %. In the comparative alloys 1 and 2, the reduction of the ductility is generated by adding Ti and Nb. In the comparative alloy 3, since an amount of the reinforcing element (Al, Mo, W) is excess, the precipitation of the harmful phase is generated, and the ductility is lowered just the same. The comparative alloy 4 is excellent in the ductility, however, is short on the added amount of the reinforcing element, and the creep rupture time is extremely short.

Accordingly, in the welding alloy in accordance with the present invention, even in the case that the strength is increased by increasing the Al amount and increasing the γ' phase precipitation amount, the reduction of the ductility is hard to be generated. Further, since the generation of the η phase and the σ phase is small, it is preferable for manufacturing the welding portion of the steam turbine, particularly the different material joint.

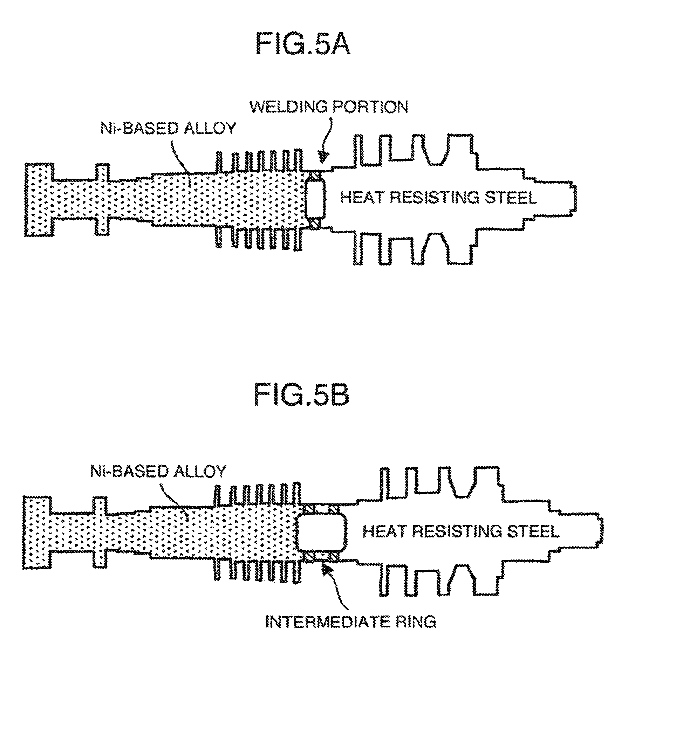

Figs. 5A and 5B show a structure of a welding rotor for a steam turbine using the welding material in accordance with the present embodiment. The welding rotor shown in Fig. 5A has a member made of the Ni-based alloy, and a member made of the heat resisting steel, and these members are directly welded by the welding material in accordance with the present invention. Further, the welding rotor shown in Fig. 5B has a member made of the Ni-based alloy, and a member made of the heat resisting steel, and these members are welded via an intermediate ring made of the Ni-based alloy. In either case, it is possible to employ the welding material in accordance with the present invention.

## Claims

1. A Ni-Fe-based alloy comprising Cr; 14 to 18 %, Al: 1.0 to 2.5 %, Mo + W: 2.5 to 5.0 %, C: 0.01 to 0.10 %, B: 0.001 to 0.03 %, and Fe: 15 to 20 %, in mass, and optionally comprising at least any one of Co, Ti, Nb, Si and Mn, wherein a content thereof in the case of including any one of Co, Ti, Nb, Si and Mn is set to Co: 0.1 to 5.0 %, Ti: 0.1 to 0,5 %, Nb: 0.1 to 2.0 %, Si: 0.01 to 0.3 % and Mn: 0.01 to 0.3 % in mass, and the remaining portion is constructed by an unavoidable impurity and Ni.

2. A welding material made of the Ni-Fe-based alloy as claimed in claim 1.

3. A welding material as claimed in claim 2, wherein the welding material is used in any of shapes of a welding rod, a welding wire and/or a welding powder.

4. A turbine rotor for a steam turbine constructed by bonding a first member made of an iron-based alloy, and a second member made of a Ni-based alloy or a Ni-Fe-based alloy, wherein said first and second members are bonded by the welding material as claimed in claim 2.

## Patentansprüche

1. Legierung auf Ni-Fe-Basis, mit Cr: 14 bis 18 %, Al: 1,0 bis 2,5 %, Mo + W: 2,5 bis 5,0 %, C: 0,01 bis 0,10 %, B: 0,001 bis 0,03 % und Fe: 15 bis 20 %, bezogen auf die Masse, und gegebenenfalls mit zumindest einem von Co, Ti, Nb, Si und Mn, wobei dessen Gehalt im Fall des Einschließens von irgendeinem von Co, Ti, Nb, Si und M eingestellt ist auf: Co: 0,1 bis 5,0 %, T: 0,1 bis 0,5 %, Nb: 0,1 bis 2,0 %, Si: 0,01 bis 0,3 % und Mn: 0,01 bis 0,3 %, bezogen auf die Masse, und der übrige Bereich aus einer unvermeidlichen Verunreinigung und Ni besteht.

2. Schweißgut, das aus der Legierung auf Ni-Fe-Basis nach Anspruch 1 hergestellt ist.

3. Schweißgut nach Anspruch 2, wobei das Schweißgut in irgendeiner Form einer Schweißstange, eines Schweißdrahts und/oder eines Schweißpulvers verwendet wird.

4. Turbinenrotor für eine Dampfturbine, die durch Bonden eines ersten Elements aus einer Legierung auf Eisenbasis und eines zweiten Elements aus einer Legierung auf Ni-Basis oder einer Legierung auf Ni-Fe-Basis hergestellt ist, wobei das erste und das zweite Element durch das Schweißgut nach Anspruch 2 gebondet sind.

## Revendications

1. Alliage à base de Ni-Fe comportant Cr : 14 à 18 %, Al : 1,0 à 2,5 %, Mo + W : 2,5 à 5,0 %, C : 0,01 à 0,10 %, B: 0,001 à 0,03 %, et Fe : 15 à 20 %, en masse, et comportant de manière facultative au moins l'un quelconque parmi Co, Ti, Nb, Si et Mn, dans lequel un contenu de celui ci dans le cas incluant l'un quelconque de Co, Ti, Nb, Si et Mn est établi à Co : 0,1 à 5,0 %, Ti : 0,1 à 0,5 %, Nb : 0,1 à 2,0%, Si : 0,01 à 0,3 % et Mn : 0,07. à 0, % en masse, et la partie restante est constituée d'une impureté inévitable et de Ni.

2. Matériau de soudure constitué de l'alliage à base de Ni-Fe selon la revendication 1.

3. Matériau de soudure selon la revendication 2, dans lequel le matériau de soudure est utilisé dans l'une quelconque de formes d'une tige de soudure, d'un fil de soudure et/ou d'une poudre de soudure.

4. Rotor de turbine pour une turbine à vapeur construite en liant un premier élément constitué d'un alliage à base de fer, et un second élément constitué d'un alliage à base de Ni ou d'un alliage à base de Ni-Fe, lesdits premier et second éléments étant liés par l'intermédiaire du matériau de soudure selon la revendication 2.
